# EUROPEAN PATENT APPLICATION

(11) **EP 4 563 044 A1**
(43) Date of publication of application: **04.06.2025**
(21) Application number: 23845778.2
(22) Date of filing: 11.07.2023
(51) Int. Cl.: A47J 27/00, A47J 36/00, A47J 36/06

(54) **COOKING APPLIANCE**

(30) Priority: 29.07.2022 CN 202210907541; 29.07.2022 CN 202222013919 U
(71) Applicant: Zhejiang Supor Electrical Appliances Manufacturing Co., Ltd., Hangzhou, Zhejiang 310052 (CN)
(72) Inventor: LI, Jiahong, Hangzhou, Zhejiang 310052 (CN); DENG, Qiang, Hangzhou, Zhejiang 310052 (CN)
(74) Representative: LLR
(86) International application number: PCT/IB2023/057085
(87) International publication number: WO 2024/023616

(57) **Abstract**

A cooking appliance (1), comprising a pot lid (4) and a material cleaning compartment assembly (5). The pot lid (4) comprises a pot lid main body (42) and a detachable lid (43), wherein the detachable lid (43) is located at a lower side of the pot lid main body (42). The material cleaning compartment assembly (5) comprises a material cleaning compartment main body (5) forming a material cleaning chamber, which has a feed port (7) and a discharge port (8); and the material cleaning compartment assembly (5) is arranged on the pot lid (4) and is connected to the detachable lid (43), and the material cleaning compartment assembly (5) and the detachable lid (43) are together detachably connected to the pot lid main body (42). When intending to clean the material cleaning chamber and the detachable lid (43), the detachable lid (43) and the material cleaning compartment assembly (5) can be disassembled together, such that the detachable lid (43) and the material cleaning chamber can be cleaned at the same time. In this way, the steps of assembly and disassembly of components are reduced, and the disassembly and cleaning process is thus simplified, such that disassembly and cleaning operations are easier to carry out, thereby improving the user experience.

## Description

### Technical Field

The present application relates to the technical field of kitchen appliances, and in particular, to a cooking appliance.

### Background

Existing cooking appliances such as an automatic rice cooker are provided with a material cleaning compartment. Some material cleaning compartments are arranged on a lid body of a rice cooker. In order to discharge waste from a material cleaning compartment, the lid body needs to be further provided with a waste discharge conduit. Both the material cleaning compartment and the waste discharge conduit come into contact with material cleaning water, and if left alone for a long time, can easily become mouldy, and need to be cleaned. The lid body of an automatic rice cooker is further provided with an inner lid, a steam valve, etc. Both the inner lid and the steam valve come into contact with steam carrying rice liquid, and if left alone for a long time, can easily become mouldy too, and need to be cleaned.

Therefore, there are many parts on the lid body that need to be cleaned, and these parts are usually detachable individually or not detachable. However, existing automatic rice cookers often still use the frame mode of a traditional rice cooker, wherein the entire lid body of the rice cooker is opened by rotating a hinge. Due to the constraint of the hinge, the lid body of the rice cooker is not detachable, making it complicated to clean the above-mentioned parts that are detachable individually or not detachable, resulting in poor user experience.

Therefore, a cooking appliance is needed to at least partially solve the above problems.

### Summary

A series of simplified concepts are introduced in the "Summary" section, and they will be further described in detail in the "Detailed Description of the Embodiments" section. The "Summary" section of the present application does not mean to attempt to define the key features and essential technical features of the claimed technical solutions. Nor does it mean to attempt to determine the scope of protection of the claimed technical solutions.

In order to at least partially solve the above problems, the present application provides a cooking appliance comprising:
a pot lid comprising a pot lid main body and a detachable lid located at a lower side of the pot lid main body; and
a material compartment chamber assembly comprising a material cleaning compartment main body forming a material cleaning chamber having a feed port and a discharge port, the material cleaning compartment assembly being arranged at the pot lid and being connected to the detachable lid, the material cleaning compartment assembly and the detachable lid being together detachably connected to the pot lid main body.

According to this solution, the material cleaning compartment assembly can be formed into a detachable whole with the detachable lid, and this detachable whole can be assembled and disassembled from the pot lid as a whole. When it is desired to clean the material cleaning chamber and the detachable lid, the detachable lid can be disassembled together with the material cleaning compartment assembly, so as to clean the detachable lid and the material cleaning chamber at the same time. The steps of assembly and disassembly of components are reduced, and the disassembly and cleaning process is simplified, such that disassembly and cleaning operations are easier to carry out, thereby improving the user experience.

Optionally, a waste discharge conduit is further comprised, the material cleaning chamber having a waste discharge port which is in communication with one end of the waste discharge conduit, and the other end of the waste discharge conduit is provided with an outlet, a part or all of the waste discharge conduit being connected to the detachable lid and/or the material cleaning compartment main body.

According to this solution, a part or all of the waste discharge conduit can be disassembled together with the detachable lid, so as to clean the detachable lid, the material cleaning chamber and the part or all of the waste discharge conduit at the same time. The steps of assembly and disassembly of components are reduced, and the disassembly and cleaning process is thus simplified.

Optionally, a part or all of the waste discharge conduit is integrally formed with the material cleaning compartment main body.

According to this solution, the assembly process is simplified, and provision of a sealing member is omitted, so that the structure inside the pot lid is simple, and it is convenient to manufacture, which is conducive to product miniaturization.

Optionally, the pot lid main body is provided with a covering portion, and the detachable lid is provided with a supporting portion, the covering portion covering the supporting portion, the waste discharge conduit being formed between the two, the supporting portion being connected to the material cleaning compartment main body.

According to this solution, the waste discharge conduit is composed of two, upper and lower, parts. When it is desired to clean the waste discharge conduit, the detachable lid is disassembled from the pot lid main body to clean the lower part. At this time, the upper part of the waste discharge conduit is exposed, which makes it convenient to be cleaned. Cleaning of the waste discharge conduit in this solution is more convenient and thorough.

Optionally, a sealing member and a crimping member are further comprised, the sealing member being crimped between the supporting portion and the crimping member, the crimping member being fixed to the detachable lid, the sealing member abutting against the covering portion.

According to this solution, wastewater and steam can be prevented from leaking from the waste discharge conduit into the pot lid.

Optionally, the supporting portion is integrally formed with the material cleaning compartment main body. According to this solution, a part of the waste discharge conduit can be integrally formed with the material cleaning compartment main body, which simplifies the assembly process, makes it possible to omit a sealing member at the material cleaning compartment main body, and facilitates manufacturing of the waste discharge conduit.

Optionally, the waste discharge conduit comprises a conduit main body and a waste discharge passage extending inside the conduit main body, the conduit main body being integrally formed with the material cleaning compartment main body. According to this solution, the entire waste discharge conduit can be integrally formed with the material cleaning compartment main body, which simplifies the assembly process and makes it possible to omit a sealing member for sealing the waste discharge conduit.

Optionally, the material cleaning compartment main body is provided with a plurality of waste discharge ports arranged in a spaced apart manner in a circumferential direction of the material cleaning compartment main body, the waste discharge conduit comprising a first conduit and a second conduit, the second conduit being arranged in a ring shape around the material cleaning compartment main body, the first conduit being in communication with the second conduit and extending to an outer periphery of the pot lid. According to this solution, the drainage volume is large, which can speed up drainage and improve drainage efficiency.

Optionally, the other end of the waste discharge conduit extends out from an outer periphery of the detachable lid. According to this solution, the waste discharge structure at the outlet of the waste discharge conduit is spaced apart from the outer periphery of the detachable lid, which facilitates discharging wastewater out of the pot lid and facilitates assembly and disassembly of the detachable lid.

Optionally, a steam passage is further comprised, the steam passage being arranged in the waste discharge conduit and in communication with the waste discharge conduit. According to this solution, the waste discharge conduit can be used for both discharging waste and discharging steam. When the waste discharge conduit is used for discharging steam, steam can enter the steam passage from an inlet of the steam passage and flow into the waste discharge conduit through an outlet of the steam passage, and then be discharged from an outlet of the waste discharge conduit. When the detachable lid is disassembled from the pot lid main body, the waste discharge conduit, the steam passage, the detachable lid and the material cleaning chamber can be cleaned at the same time, thereby further reducing the steps of assembly and disassembly of components and simplifying the disassembly and cleaning process.

Optionally, there is a gap between the steam passage and a side wall of the waste discharge conduit. According to this solution, wastewater flowing out of the waste discharge port can flow toward an outlet of the waste discharge conduit through the gap between the steam passage and the waste discharge conduit, so as to discharge waste smoothly. And/or, a top part of the steam passage is provided with an outlet. According to this solution, the outlet of the steam passage can be made higher than the highest liquid level during waste discharge to prevent wastewater from entering the steam passage and falling into the pot body from the steam passage.

Optionally, a top part of the steam passage protrudes upward from an inner top wall surface of the waste discharge conduit. Or, the steam passage is below an inner top wall surface of the waste discharge conduit, and is higher than an inner bottom wall surface of the waste discharge conduit by more than 3 mm. According to this solution, the outlet of the steam passage can be further made higher than the highest liquid level during waste discharge to prevent wastewater from entering the steam passage and falling into the pot body from the steam passage.

Optionally, a pot body is further comprised, the pot lid covering the pot body and forming a cooking chamber between it and the pot body, the pot lid and the pot body being configured as a square body, the outlet of the waste discharge conduit being located at a corner of the pot lid, the pot body being provided with an inlet joint, an inlet of which is docked to the outlet of the waste discharge conduit.

According to this solution, when the pot lid covers the pot body, the outlet of the waste discharge conduit is docked to the inlet of the inlet joint, so that wastewater can flow from the waste discharge conduit of the pot lid into the inlet joint of the pot body, and be discharged to a wastewater tank via connection between the inlet joint and the wastewater tank, or discharged to an exterior sink via connection with a waste discharge pipe. The waste discharge structure can be completely hidden in the pot body and the pot lid, so that the external structure of the pot lid is simple and esthetic.

Optionally, the material cleaning compartment assembly further comprises a material cleaning compartment lid movably arranged in the material cleaning chamber , the material cleaning compartment lid being movable at least between a communicating position and a sealed position and comprising a sealing portion, the waste discharge port being in communication with the cooking chamber below the pot lid to discharge steam in the cooking chamber when the sealing portion is in the communicating position, and the waste discharge port being not in communication with the cooking chamber when the sealing portion is in the sealed position,.

According to this solution, the material cleaning compartment lid is used not only to open and close the discharge port, but also to open and close the passage between the waste discharge port and the material cleaning chamber, so that waste discharge can be activated and desactived. In addition, the passage between the waste discharge port and the cooking chamber can be opened and closed, so that steam can flow through the discharge port, the material cleaning chamber, the waste discharge port in sequence before entering the waste discharge conduit so that the steam can be discharged from the waste discharge conduit.

Optionally, the material cleaning compartment lid is movable between an open position for opening the discharge port and a closed position for covering the discharge port. Thus, automatic material feeding is facilitated. And/or, the material cleaning compartment assembly further comprises a stirring member located in the material cleaning chamber and connected to the material cleaning compartment lid. Thus, automatic cleaning of a material can be achieved, and the material can be better cleaned.

Optionally, a steam valve is further comprised, the steam valve being arranged at the detachable lid and detachably connected to the pot lid main body together with the detachable lid, or a steam valve is further comprised, the steam valve being arranged at the material cleaning compartment main body and connected to the detachable lid together with the material cleaning compartment main body.

According to this solution, the steam valve can be disassembled together with the detachable lid so that the detachable lid, the material cleaning chamber and the steam valve can be cleaned at the same time. The steps of assembly and disassembly of components are further reduced, and the disassembly and cleaning process is thus simplified.

Optionally, the pot lid main body is provided with a magnetic component, and at least a part of the detachable lid is a magnetic part, there being a magnetic attraction force between the detachable lid and the pot lid main body when the detachable lid is connected to the pot lid main body. According to this solution, the detachable lid can be disassembled from the pot lid main body by just an external force overcoming the magnetic attraction force, and the detachable lid can be assembled just by aligning the detachable lid with the pot lid main body and then using the magnetic attraction force, without the help of auxiliary tools. The assembly and disassembly process of the detachable lid is simple and convenient, which greatly improves work efficiency.

Optionally, the magnetic component is a magnet or an electromagnet, and the magnetic part is a magnet or an electromagnet. Thus, a large and stable magnetic attraction force can be generated between the detachable lid and the pot lid main body. Alternatively, the magnetic component is a magnet or an electromagnet, and the magnetic part is one of iron, nickel, cobalt, ferritic steel, martensitic steel, and austenite-ferrite dual-phase steel. Thus, the detachable lid is preferably entirely made of the magnetic part and is of a simple structure and easy to manufacture. Alternatively, the magnetic component is one of iron, nickel, cobalt, ferritic steel, martensitic steel, and austenite-ferrite dual-phase steel, and the magnetic part is a magnet or an electromagnet. Thus, a part of the detachable lid is preferably the magnetic part, and the cost of the detachable lid is low.

Optionally, a lower surface of the detachable lid is provided with a gripping portion protruding downward. Thus, when a user desires to clean the detachable lid and/or the material cleaning chamber, the detachable lid and the material cleaning compartment assembly connected thereto can be disassembled by just grasping the gripping portion with a hand, which is convenient to operate.

And/or, the pot lid main body is provided with a mounting groove in which the detachable lid is located, the mounting groove having a shape adapted to that of the detachable lid.

According to this solution, the detachable lid can be positioned in the mounting groove to prevent the detachable lid from shifting, and the lower surface of the detachable lid can be substantially flush with the lower surface of the pot lid main body.

Optionally, a driving assembly is further comprised, and the material cleaning compartment assembly further comprises a material cleaning compartment lid and a stirring member located in the material cleaning chamber and connected to the material cleaning compartment lid, the material cleaning compartment lid being movable between an open position for opening the discharge port and a closed position for covering the discharge port, the driving assembly being arranged above the material cleaning compartment assembly and configured to drive the stirring member to rotate and the material cleaning compartment lid to move linearly.

According to this solution, the driving assembly provided in the cooking appliance can realize material cleaning an action of throwing a material during material discharging, as well as an action of opening and closing the material cleaning compartment lid, thereby improving the autonomy of the cooking appliance.

Optionally, a clean water tank and a wastewater tank are further comprised, the clean water tank being docked to the feed port through a water delivery component, the material cleaning chamber being docked to the wastewater tank through the waste discharge conduit. Thus, the cooking appliance is built with a clean water storage container and a wastewater collection container, the autonomy of the cooking appliance is improved, and the overall layout of the cooking appliance is appropriate, which is conducive to product miniaturization.

Optionally, a material storage compartment and a material feeding component are further comprised, the material feeding component being configured to transport a food material in the material storage chamber to the material cleaning chamber through the feed port. Thus, the cooking appliance is built with a material storage container and a material feeding component, the autonomy of the cooking appliance is improved, and autonomous material feeding into the material cleaning chamber is realized.

### Brief description of drawings

The following drawings of the present application are used as a part of the present application for understanding the present application. The drawings show embodiments of the present application and their description, which are used to explain the principles of the present application.

In the drawings:
Fig. 1 is a schematic structural view of a cooking appliance according to a preferred mode of realization of the present application;
Fig. 2 is a view in perspective of the cooking appliance shown in Fig. 1, wherein the pot lid is in an open state;
Fig. 3 is another view in perspective of the cooking appliance shown in Fig. 1, wherein the pot lid is in an open state, and the material cleaning compartment assembly and the detachable lid are disassembled;
Fig. 4 is a view in perspective of the material cleaning compartment assembly and the detachable lid shown in Fig. 1;
Fig. 5 is another view in perspective of the material cleaning compartment assembly and the detachable lid shown in Fig. 1;
Fig. 6 is an exploded view in perspective of a part of the material cleaning compartment assembly and the detachable lid shown in Fig. 1;
Fig. 7 is a cross-sectional view of the material cleaning compartment assembly and the detachable lid shown in Fig. 1;
Fig. 8 is an exploded view in perspective of the material cleaning compartment assembly and the detachable lid shown in Fig. 1;
Fig. 9 is a top view of the material cleaning compartment assembly and the detachable lid shown in Fig. 1;
Fig. 10 is a view in perspective of the pot lid main body shown in Fig. 1;
Fig. 11 is a cross-sectional view of the material cleaning compartment assembly shown in Fig. 1;
Fig. 12 is another cross-sectional view of the material cleaning compartment assembly shown in Fig. 1;
Fig. 13 is an exploded view in perspective of the material cleaning compartment assembly shown in Fig. 1;
Fig. 14 is a cross-sectional view of the cooking appliance shown in Fig. 1, wherein the material cleaning compartment lid is in a closed position;
Fig. 15 is another cross-sectional view of the cooking appliance shown in Fig. 1, wherein the material cleaning compartment lid is in a sealed position;
Fig. 16 is yet another cross-sectional view of the cooking appliance shown in Fig. 1, wherein the material cleaning compartment lid is in an open position;
Fig. 17 is a schematic structural view of a cooking appliance according to another preferred mode of realization of the present application, wherein the pot lid is in an open state, and the material cleaning compartment assembly and the detachable lid are disassembled;
Fig. 18 is a cross-sectional view of the cooking appliance shown in Fig. 17;
Fig. 19 is a view in perspective of the material cleaning compartment main body and the detachable lid shown in Fig. 17;
Fig. 20 is a cross-sectional view of a cooking appliance according to yet another preferred mode of realization of the present application; and
Fig. 21 is an exploded view in perspective of the material cleaning compartment assembly and the detachable lid shown in Fig. 20.

### Detailed description of the embodiments

In the following description, a large amount of specific details are given to provide a more thorough understanding of the present application. However, it is obvious to those skilled in the art that the present application can be implemented without one or more of these details. In other examples, in order to avoid confusion with the present application, some technical features known in the art are not described.

In order to thoroughly understand the present application, a detailed description will be provided in the following description. Obviously, implementation of the modes of realization of the present application is not limited to the specific details familiar to those skilled in the art. Preferred embodiments of the present application are described in detail below, but in addition to this detailed description, the present application can also have other modes of realization.

It should be noted that the terms used herein are only for describing specific embodiments and are not intended to limit exemplary embodiments according to the present application. As used herein, unless the context clearly indicates otherwise, the singular form is also intended to include the plural form. In addition, it should also be understood that when the terms "comprise" and/or "include" are used in the present specification, they indicate the presence of the referenced feature, whole, step, operation, element and/or component, but do not exclude the presence or addition of one or more other features, wholes, steps, operations, elements, components and/or combinations thereof.

Ordinal numbers such as "first" and "second" cited in the present application are merely identifiers and do not have any other meaning, such as a specific order, etc. Moreover, for example, the term "first component" itself does not imply the existence of a "second component", and the term "second component" itself does not imply the existence of a "first component".

It should be noted that the terms "upper", "lower", "front", "back", "left", "right", "inner", "outer" and similar expressions used herein are for illustrative purposes only and are not limiting.

Exemplary embodiments according to the present application will now be described in more detail with reference to the accompanying drawings. However, these exemplary embodiments can be implemented in a variety of different forms and should not be construed as being limited to the embodiments described herein. It should be understood that these embodiments are provided to make the disclosure of the present application thorough and complete, and to fully convey the concepts of these exemplary embodiments to those skilled in the art.

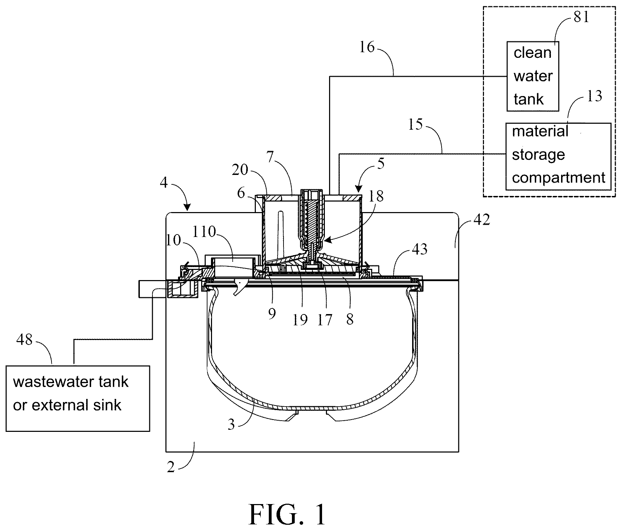

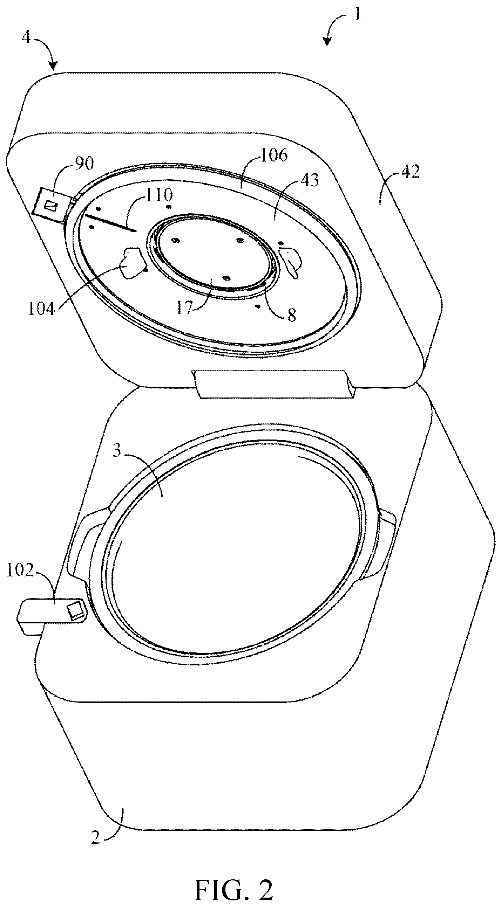

Figs. 1 to 16 show a preferred mode of realization of a cooking appliance. In reference to Figs. 1 and 2, the cooking appliance 1 comprises a pot body assembly. The pot body assembly comprises a pot body 2 and a pot lid 4 covering the pot body 2. The pot body 2 comprises an inner pot 3 and an outer pot. The inner pot 3 is removably arranged in the outer pot. The pot lid 4 is provided with a sealing ring 106. When the pot lid 4 covers the pot body 2, the sealing ring 106 abuts against the inner pot 3 to seal the gap between the inner pot 3 and the pot lid 4. The pot lid 4 is pivotally connected to the pot body 2. When the pot lid 4 covers the pot body 2, a cooking space is formed between the pot lid 4 and the inner pot 3.

A heating device (not shown) and a power supply module for supplying power to the heating device are generally provided at the bottom of the pot body 2. The power supply module can supply power to the heating device so that the heating device can heat the inner pot 3 in the pot body 2. In a preferred mode of realization, the heating device performs electromagnetic heating. By way of example, the heating device can comprise a coil disk and a coil wound on the coil disk, so that when powered, the heating device can generate heat to heat the inner pot 3. It can be understood that in other modes of realization (not shown), the heating device can be configured to be of another structure, such as heating wire. By way of example, the power supply module can be a plug that is adapted to an external power supply and can supply power to the heating device after being plugged in. The power supply module can also be configured as a battery accommodated in the pot body 2.

The cooking appliance 1 further comprises a material cleaning compartment assembly 5 arranged in the pot lid 4. The material cleaning compartment assembly 5 comprises a material cleaning compartment main body 6 forming a material cleaning chamber. The material cleaning chamber has a discharge port 8 through which a material cleaned in the material cleaning chamber can be discharged. The material cleaning chamber further comprises a feed port 7 through which a material and water can enter the material cleaning chamber.

The cooking appliance 1 further comprises a material storage compartment 13 and a material feeding component 15. A material can be stored in the material storage compartment 13. The material can be a food material such as rice, millet, corn, black beans, red beans, and mung beans. The material storage compartment 13 has an outlet (not shown), which can be arranged at a lower part of the material storage compartment 13, so as to further facilitate the material in the material storage compartment 13 flowing out from the outlet by gravity. In an example, the material feeding component 15 can comprise a material feeding compartment capable of communicating with the material storage compartment 13 and transporting the material in the material storage compartment 13 to the material cleaning chamber via the feed port 7. In another example, the material feeding component 15 can be a conduit communicating with the material storage compartment 13 and provided with a fan to transport the material in the material storage compartment to the material cleaning chamber by a wind force. Of course, the material feeding component 15 can also be another suitable material feeding component and/or assembly.

The cooking appliance 1 further comprises a clean water tank 81 and a water delivery component. The clean water tank 81 can be connected to a liquid inlet of the material cleaning chamber through the water delivery component. The water delivery component can be a water delivery pipe provided with a water pump. When performing a water adding operation, the water pump can be turned on and supply water in the clean water tank 81 to the material cleaning chamber through the water delivery component. Preferably, the liquid inlet of the material cleaning chamber can be the same as the feed port 7. In other examples, the clean water tank 81 can be omitted, the water delivery component can be directly connected to a water source, such as a faucet, and a certain amount of water is delivered into the material cleaning chamber by opening and closing the faucet.

The cooking appliance 1 further comprises a waste discharge conduit 10 and a wastewater tank 48 in communication with the waste discharge conduit 10. The material cleaning compartment main body 6 is further provided with a waste discharge port 9. An end of the waste discharge conduit 10 can be in communication with the waste discharge port 9, and the other end of it can be provided with an outlet. Wastewater in the material cleaning chamber can flow into the waste discharge conduit 10 through the waste discharge port 9, and then be discharged from the outlet of the waste discharge conduit 10. In another example, the wastewater tank can be omitted, and an external waste discharge pipe can be connected. Wastewater drawn out of the waste discharge conduit 10 is discharged into an external sink through the waste discharge pipe.

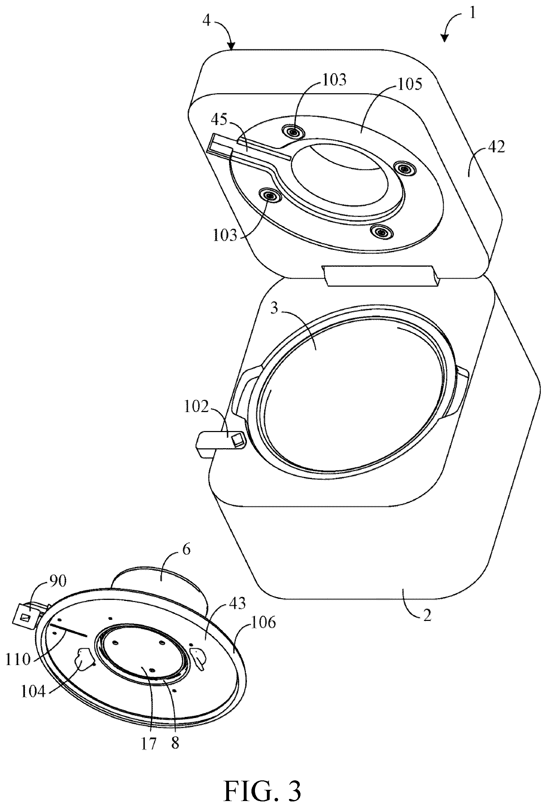

As shown in Figs. 3 to 7, the material cleaning compartment main body 6 can be arranged to extend vertically (that is, the material cleaning chamber has the same width from top to bottom), or to extend obliquely from top to bottom toward the inside of the material cleaning chamber (that is, the material cleaning chamber is wider at the bottom than at the top) so as to reduce material residue. In addition, the inner surface of the material cleaning compartment main body 6 is arranged as a smooth surface to further reduce material residue. The material cleaning compartment assembly 5 further comprises a stirring assembly 18 arranged in the material cleaning compartment main body 6 and a material cleaning compartment lid 17 arranged below the stirring assembly 18.

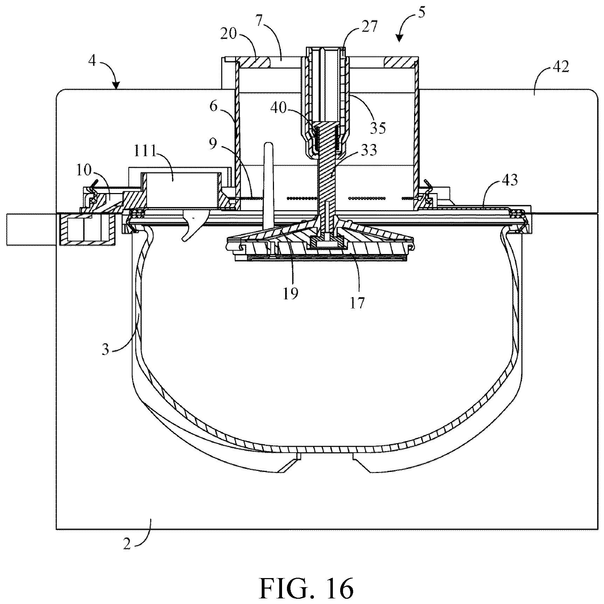

The material cleaning compartment lid 17 is movably arranged in the material cleaning compartment main body 6. Specifically, the material cleaning compartment lid 17 is movable between an open position for opening the discharge port 8 and a closed position for covering the discharge port 8. As shown in Fig. 1, the material cleaning compartment lid 17 is located at the top and is in a closed position for covering the discharge port 8; the material cleaning compartment lid 17 moves to the bottom to be in an open position for opening the discharge port 8 (see Fig. 16), at which time the material in the material cleaning chamber can fall into the inner pot 3 through the discharge port 8.

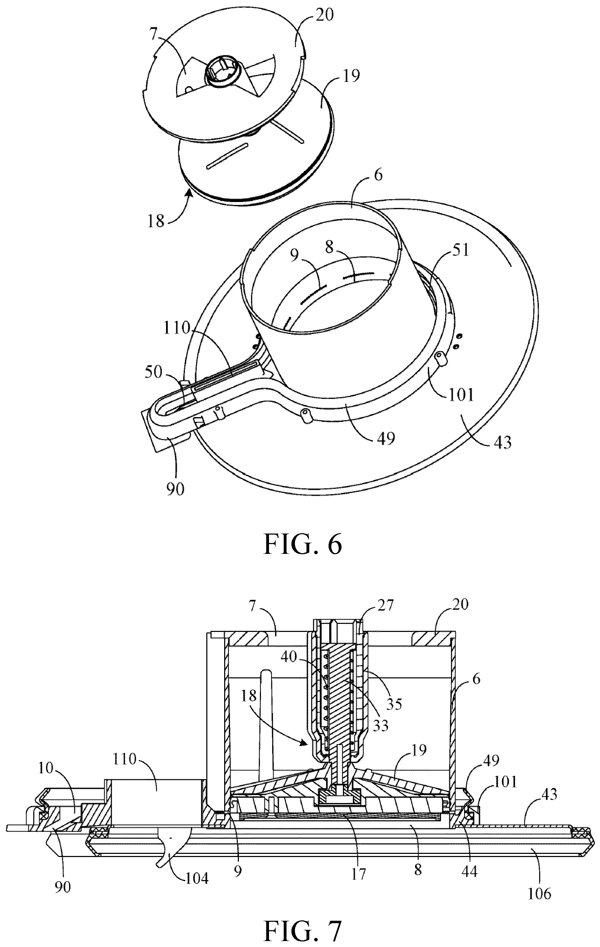

The material cleaning compartment assembly 5 further comprises a top lid 20 capable of covering the material cleaning compartment main body 6. The feed port 7 is arranged in the top lid 20. Preferably, the top lid 20 is detachably connected to the material cleaning compartment main body 6 to facilitate disassembly and cleaning operations of the material cleaning compartment assembly 5, specifically to facilitate cleaning of the stirring assembly 18, the material cleaning compartment lid 17 and the material cleaning chamber. Optionally, in reference to Fig. 6, the stirring assembly 18 is arranged at the top lid 20, and the stirring assembly 18 and the material cleaning compartment lid 17 and the top lid 20 connected thereto form a detachable whole detachably connected to the material cleaning compartment main body 6 .

As shown in Fig. 7, the stirring assembly 18 comprises a stirring member 19 connected to the material cleaning compartment lid 17. The stirring member 19 and the material cleaning compartment lid 17 can move together between an open position and a closed position, and the stirring member 19 is rotatable relative to the material cleaning compartment lid 17 (that is, when the stirring member 19 rotates, the material cleaning compartment lid 17 does not rotate). The stirring member 19 can rotate when performing material cleaning and material throwing operations.

The pot lid 4 comprises a pot lid main body 42 and a detachabe lid 43 located on the lower side of the pot lid main body 42 and capable of being detachably connected to the pot lid main body 42. Thus, when desiring to clean the detachable lid 43, a user can directly detach it, which is simple and convenient. A sealing ring 106 is provided at the periphery of the detachable lid 43 and can be disassembled together with the detachable lid 43 for cleaning at the same time.

The detachable lid 43 can be arranged at the bottom of the material cleaning compartment main body 6 of the material cleaning compartment assembly 5. In this mode of realization, the material cleaning compartment assembly 5 is connected to the detachable lid 43. Specifically, the material cleaning compartment main body 6 is connected to the detachable lid 43. As shown in Fig. 3, the material cleaning compartment assembly 5 can be detachably connected to the pot lid main body 42 together with the detachable lid 43. The material cleaning compartment assembly 5 can be formed with the detachable lid 43 into a detachable whole that can be disassembled from or assembled with the pot lid 4 as a whole. When it is desired to clean the material cleaning chamber and the detachable lid 43, the detachable lid 43 can be disassembled together with the material cleaning compartment assembly 5 so that one can clean the detachable lid 43 and the material cleaning chamber at the same time. The steps of assembly and disassembly of components are reduced, and the disassembly and cleaning process is simplified, such that disassembly and cleaning operations are easier to carry out, thereby improving the user experience.

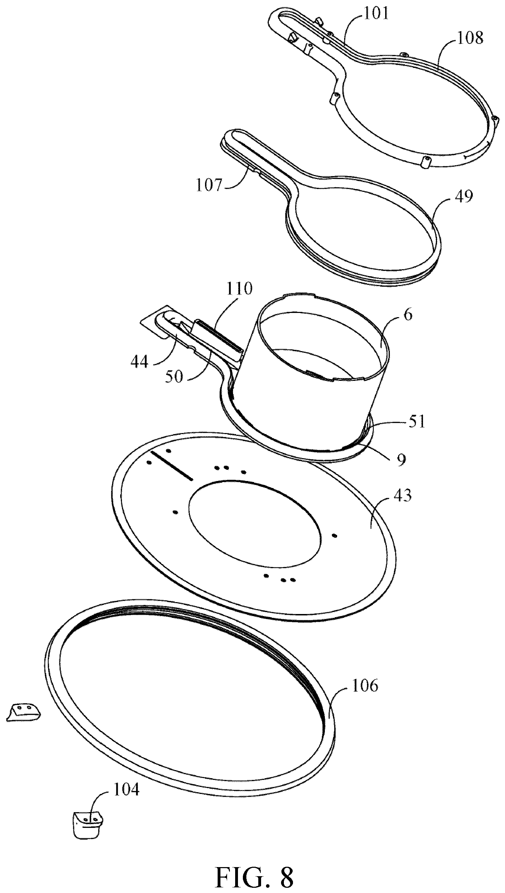

The material cleaning compartment main body 6 can be connected to the detachable lid 43. As shown in Fig. 8, the material cleaning compartment main body 6 and the detachable lid 43 are two independent components. The detachable lid 43 is provided in a central part with a through hole so that the detachable lid 43 can be sleeved on the material cleaning compartment main body 6 .

A part or all of the waste discharge conduit 10 can be connected to the detachable lid 43 and/or the material cleaning compartment main body 6. A part or all of the waste discharge conduit 10 can be disassembled together with the detachable lid 43 so that one can clean the detachable lid 43, the material cleaning chamber and a part or all of the waste discharge conduit 10 at the same time. At least a part of the waste discharge conduit 10 is detachably or non-detachably arranged on the detachable lid 43. By detachably arranging a part of the waste discharge conduit 10 on the detachable lid 43, it is possible to further detach the waste discharge conduit 10 for cleaning, so that cleaning can be more thorough.

As shown in Figs. 8 to 10, the waste discharge conduit 10 can comprise two, upper and lower, parts. Specifically, the waste discharge conduit 10 comprises a supporting portion 44 arranged on the detachable lid 43 and a covering portion 45 arranged on the pot lid main body 42. The position of the supporting portion 44 corresponds to the position of the covering portion 45. When the detachable lid 43 is connected to the pot lid main body 42, the covering portion 45 can exactly cover the supporting portion 44 to form the waste discharge conduit 10. When the detachable cover 43 is disassembled from the pot lid main body 42, the two (upper and lower) parts of the waste discharge conduit 10 can also be separated, so that the waste discharge conduit 10 can be cleaned more thoroughly to avoid forming sanitary dead corners.

As shown in Fig. 8, a part or all of the waste discharge conduit 10 can be integrally formed with the material cleaning compartment main body 6. In the illustrated mode of realization, a part of the waste discharge conduit 10 is integrally formed with the material cleaning compartment main body 6. Specifically, the supporting portion 44 can be integrally formed with the material cleaning compartment main body 6. In other modes of realization (not shown), the supporting portion 44 can be connected to the material cleaning compartment main body 6. For example, the supporting portion 44 is an independent component and is connected to the material cleaning compartment main body 6 by a fastening structure such as screws spaced apart. The supporting portion 44 can be connected to the detachable lid 43. For example, the supporting portion 44 is an independent component and is connected to the detachable lid 43 by a fastening structure such as screws spaced apart. Of course, if necessary and/or desired, the supporting portion 44 can be integrally formed with the detachable lid 43.

Preferably, the waste discharge conduit 10 further comprises a sealing member 49 and a crimping member 101. The sealing member 49 is arranged between the supporting portion 44 and the covering portion 45. In the illustrated mode of realization, the sealing member 49 is connected to the supporting portion 44. When the detachable lid 43 is connected to the pot lid main body 42, the covering portion 45 can be pressed against the sealing member 49 to realize sealing. The crimping member 101 is arranged above the sealing member 49. The sealing member 49 is crimped between the supporting portion 44 and the crimping member 101. The shape of the crimping member 101 is adapted to the shape of the sealing member 49. Specifically, the outer periphery of the sealing member 49 is provided with a circle of fixing portion 107 protruding outward. The inner periphery of the crimping member 101 is provided with a crimping portion 108 protruding inward. The crimping portion 108 can be buckled to the fixing portion 107. Optionally, the crimping portion 108 can also be arranged in a circle. The crimping member 101 is connected to the detachable lid 43 by, for example, a fastening structure such as screws spaced apart.

In a mode of realization not shown, the waste discharge conduit 10 comprises an integral part. Specifically, the waste discharge conduit 10 comprises a conduit main body and a waste discharge passage extending in the conduit main body. The cross section of the conduit main body is a closed shape. The conduit main body can be integrally formed with the material cleaning compartment main body 6.

In order to improve drainage efficiency, preferably, the material cleaning compartment main body 6 is provided with a plurality of waste discharge ports 9 evenly spaced in the circumferential direction of the material cleaning compartment main body 6. The waste discharge conduit 10 comprises a first conduit 50 and a second conduit 51 in communication with the first conduit 50. The second conduit 51 is arranged in a ring shape around the material cleaning compartment main body 6 and is in communication with the plurality of waste discharge ports 9. The first conduit 50 extends from the second conduit 51 in the radial direction of the pot lid 4 to the outer periphery of the pot lid 4. In this solution, the sealing member 49 comprises an annular sealing portion for sealing the second conduit 51 and a strip sealing portion for sealing the first conduit 50. Two ends of the strip sealing portion are respectively connected to two ends of the annular sealing portion. The crimping member 101 comprises an annular crimping portion corresponding to the annular sealing portion and a strip crimping portion corresponding to the annular sealing portion. Two ends of the strip crimping portion are respectively connected to two ends of the annular crimping portion.

In a mode of realization not shown, the material cleaning compartment main body 6 comprises only one waste discharge port 9 arranged at the material cleaning compartment main body 6. In this mode of realization, the waste discharge conduit 10 extends in the pot lid 4 from the waste discharge port 9 in the radial direction of the pot lid 4 to the outer periphery of the pot lid 4. That is, in this mode of realization, the waste discharge conduit 10 does not comprise the annular second conduit.

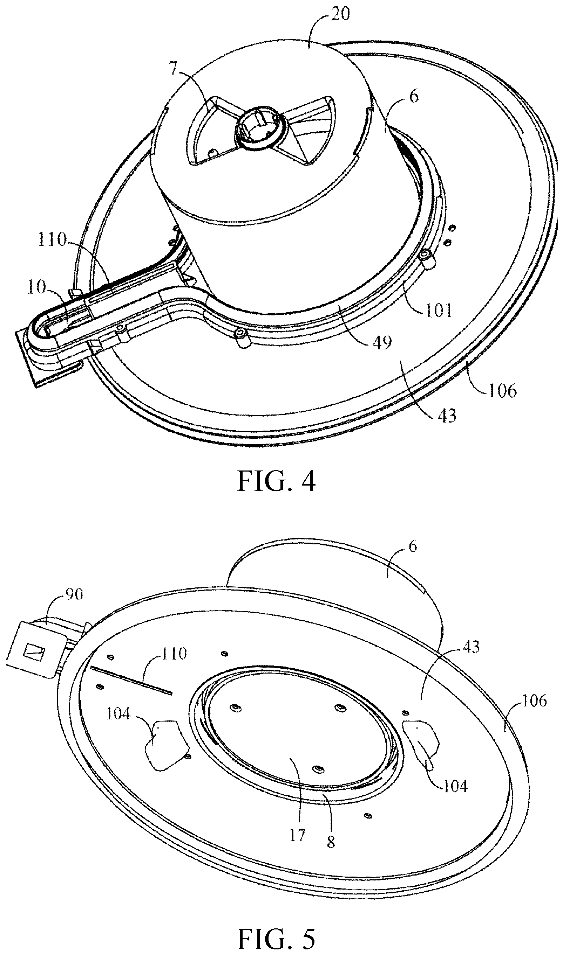

In reference to Figs. 4 to 9, a steam passage 110 can be further provided inside the pot lid 4. An inlet of the steam passage 110 faces the cooking chamber, specifically faces downward, and is in communication with the cooking chamber. An outlet of the steam passage 110 is in communication with the waste discharge conduit 10. Thus, the waste discharge conduit 10 can be used not only for discharging waste, but also for discharging steam. When the waste discharge conduit 10 is used for discharging steam, steam can enter the steam passage 110 from the inlet of the steam passage 110, flow into the waste discharge conduit 10 through the outlet of the steam passage 110, and then be discharged from the outlet of the waste discharge conduit 10.

In this way, the outlet of the steam passage 110 can be hidden in the pot lid 4 and steam can be prevented from being discharged from the upper side of the pot lid 4, thereby preventing a cabinet above the cooking appliance 1 from being damaged due to adsorption of steam condensation water, avoiding the risk of scalding a user due to contact with high-temperature steam, and improving the user's utilization experience. With the outlet of the steam passage 110 not directly exposed, the external structure of the pot lid 4 can be made simple and aesthetic.

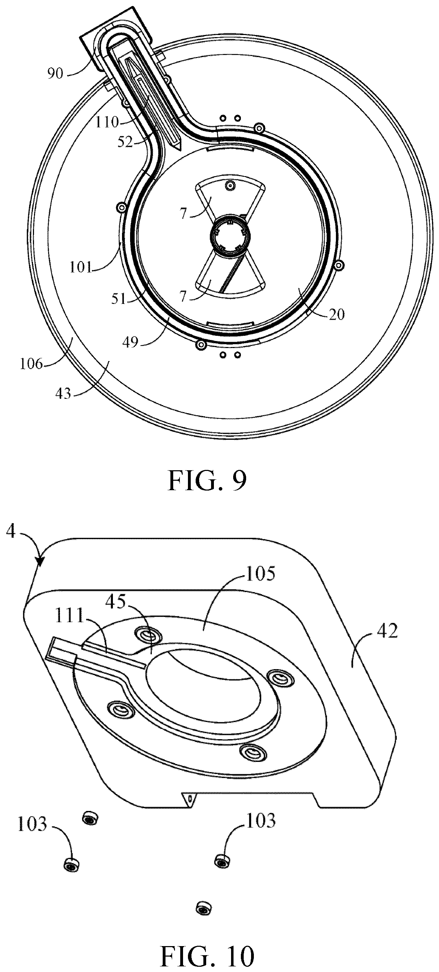

The steam passage 110 can be arranged in the waste discharge conduit 10. The total area of the outlet of the steam passage 110 is greater than or equal to 10 mm². The total area can be, for example, 10 mm², 15 mm², 20 mm², 25 mm², 30 mm², 35 mm², 40 mm², 45 mm², 50 mm², etc. In order to enable the waste discharge conduit 10 to discharge waste smoothly, as shown in Fig. 9, there can be a gap between the steam passage 110 and a side wall of the waste discharge conduit 10. Wastewater flowing out of the waste discharge port 9 flows toward the outlet through the gap. There is a gap between both sides of the steam passage 110 and the corresponding side walls of the waste discharge conduit 10.

As shown in Fig. 9, the outlet of the steam passage 110 is arranged at its top part. The top part of the steam passage 110 protrudes upward from an inner top wall of the waste discharge conduit 10. Thus, the outlet of the steam passage 110 can be higher than the highest liquid level during waste discharge to prevent wastewater from entering the steam passage 110 and then falling into the pot body 2 from the steam passage 110. Specifically, the steam passage 110 extends between the supporting portion 44 and the covering portion 45. When it is desired to clean the steam passage 110, the steam passage 110 can be cleaned by simply disassembling the detachable lid 43 from the pot lid main body 42, which makes cleaning of the steam passage 110 more convenient and thorough.

The covering portion 45 can be provided with a receiving groove 111 (Fig. 10 ) with an opening facing downward. The top part of the steam passage 110 has an outlet and extends into the receiving groove 111. The shape of the receiving groove 111 is adapted to the shape of the steam passage 110. The top surface of the steam passage 110 is open to form the outlet. Of course, the outlet of the steam passage 110 can also be arranged in a side wall of the steam passage 110. There is a gap between the steam passage 110 and the top surface and side surface of the receiving groove 111. Steam can enter the waste discharge conduit 10 through the gap between the steam passage 110 and the top surface and/or side surface of the receiving groove 111 so as to discharge steam smoothly. The steam passage 110 can be connected to the supporting portion 44.

In the illustrated mode of realization, the steam passage 110 is integrally formed with the supporting portion 44. By providing the receiving groove 111, the size of the waste discharge conduit 10 in the vertical direction can be reduced. In other words, the covering portion 45 is arranged closer to the supporting portion 44. Thus, the size of the pot lid 4 in the vertical direction can be reduced.

In other modes of realization (not shown), the covering portion 45 can not be provided with a receiving groove 111. In this solution, the steam passage 110 is below the inner top wall surface of the waste discharge conduit 10, and there is a gap between the steam passage 110 and the inner top wall surface of the waste discharge conduit 10. Specifically, there is a gap between the steam passage 110 and the inner surface of the covering portion 45. The steam passage 110 can be for example 3 mm, 3.5 mm, 4 mm, 4.5 mm, 5 mm higher than the inner bottom wall surface of the waste discharge conduit 10. By appropriately setting the height of the steam passage 110, the outlet of the steam passage 110 is made higher than the highest liquid level during waste discharge.

Optionally, as shown in Fig. 9, the steam passage 110 is arranged in the first conduit 50. Thus, the waste discharge conduit 10 can be easily arranged by utilizing the shape specifications and larger waste discharge space of the first conduit 50. The steam passage 110 and the first conduit 50 both extend in the radial direction of the pot lid 4 so that the steam passage 110 has a large cross-sectional area. In the illustrated mode of realization, the steam passage 110 is at a number of one and in the shape of a strip extending in the radial direction of the pot lid 4. Both the inlet and outlet of the steam passage 110 are also in the shape of a strip (Fig. 5). Correspondingly, the receiving groove 111 is also in the shape of a strip extending in the radial direction of the pot lid 4. Of course, at least two steam passages 110 can be provided in a spaced apart manner in an extension direction of the waste discharge conduit 10. For example, there are two, three or more steam passages 110.

In this mode of realization, the detachable lid 43 is provided with an opening at a position corresponding to the steam passage 110. The opening can be used as a part of the steam passage 110. In other words, the opening can be regarded as an inlet of the steam passage 110.

As shown in Fig. 2, the other end of the waste discharge conduit 10 where the outlet is located can extend from the outer periphery of the detachable lid 43. The waste discharge structure at the outlet of the waste discharge conduit 10 is spaced apart from the outer periphery of the detachable lid 43, which facilitates discharging wastewater to the outside of the pot lid 4 and facilitates assembly and disassembly of the detachable lid 43. The pot body 2 is provided with an inlet joint 102. An inlet of the inlet joint 102 can be docked to the outlet of the waste discharge conduit 10. Wastewater can flow from the waste discharge conduit 10 of the pot lid 4 into the inlet joint 102 of the pot body 2 and be connected to the wastewater tank 48 through the inlet joint 102 so as to be discharged to the wastewater tank 48, or be connected to a waste discharge pipe so as to be discharged into an external sink. The waste discharge structure can be completely hidden in the pot body 2 and the pot lid 4, so that the external structure of the pot lid 4 is simple and aesthetic.

As shown in Fig. 7, the waste discharge conduit 10 comprises a docking conduit 90 located at an end. The docking conduit 90 extends downward from an end of the first conduit 50. The inlet joint 102 is located below the docking conduit 90 and can dock with an outlet of the docking conduit 90. Depending on the position of the inlet joint 102, the docking conduit 90 can extend vertically downward relative to the first conduit 50, or can extend obliquely relative to the first conduit 50. In the illustrated mode of realization, the docking conduit 90 extends obliquely relative to the first conduit 50, and in this mode of realization, the docking conduit 90 is an integral piece.

In reference back to Fig. 2, the pot lid 4 and the pot body 2 can both be configured as a substantially square body, so that the pot body assembly is a substantially square body. In the illustrated mode of realization, the pot lid 4 and the pot body 2 both form a substantially rectangular body, and the pot body assembly is a substantially rectangular body. The inner pot 3 is a cylindrical component and the detachable lid 43 is correspondingly a circular component. The outlet of the waste discharge conduit 10 can be located at a corner of the pot lid 4 and the corresponding inlet joint 102 is located at a corner of the pot body 2. The space at the corners of the pot lid 4 and the pot body 2 can be used to arrange the waste discharge structure, thereby reducing the size of the pot lid 4 and the pot body 2, which is conducive to product miniaturization.

As shown in Fig. 10, the pot lid main body 42 is provided with a magnetic member 103, and at least a part of the detachable lid 43 is a magnetic part. There is a magnetic attraction force between the detachable lid 43, when it is connected to the pot lid main body 42, and the pot lid main body 42. The detachable lid 43 is assembled on the pot lid main body 42 by the magnetic attraction force, which facilitates assembly and disassembly of the detachable lid 43. Specifically, the detachable lid 43 can be disassembled from the pot lid main body 42 just by an external force that overcomes the magnetic attraction force, and can be assembled with the help of the magnetic attraction force after aligning the detachable lid 43 with the position of the pot lid main body 42, without the help of auxiliary tools. The assembly and disassembly process of the detachable lid 43 is simple and convenient, which greatly improves work efficiency.

In a mode of realization, the magnetic member 103 can be a magnet or an electromagnet, and the magnetic part is a magnet or an electromagnet. In this solution, a large and stable magnetic attraction force can be generated between the detachable lid 43 and the pot lid main body 42. In another mode of realization, the magnetic member 103 is a magnet or an electromagnet, and the magnetic part is one of iron, nickel, cobalt, ferrite steel, martensitic steel, and austenite-ferrite dual-phase steel. In this solution, the detachable lid 43 is preferably entirely the magnetic part. Such a detachable lid 43 is simple in structure and easy to manufacture. In another mode of realization, the magnetic member 103 is one of iron, nickel, cobalt, ferrite steel, martensitic steel, and austenite-ferrite dual-phase steel, and the magnetic part is a magnet or an electromagnet. In this solution, preferably, a part of the detachable lid 43 is the magnetic part. The cost of such a detachable lid 43 is low.

The illustrated mode of realization shows that the magnetic member 103 is magnets arranged at intervals around the material cleaning compartment main body 6. Four magnetic members 103 arranged at intervals are shown in the figure. The magnetic members 103 can ferromagnets. The magnetic members 103 can be connected to the pot lid main body 42 by a fastening structure such as screws arranged at intervals. The entire detachable lid 43 is one of iron, nickel, cobalt, ferrite steel, martensitic steel, and austenite-ferrite dual-phase steel, so that the whole detachable lid 43 is magnetic.

The pot lid main body 42 is provided with a mounting groove 105 that is recessed upward from the lower surface of the pot lid main body 42. The detachable lid 43 is located in the mounting groove 105. The shape of the mounting groove 105 is adapted to the shape of the detachable lid 43. The detachable lid 43 can be positioned in the mounting groove 105 to prevent the detachable lid 43 from shifting, and to allow the lower surface of the detachable lid 43 to be substantially flush with the lower surface of the pot lid main body 42. The magnetic member 103 can be arranged in the mounting groove 105.

The lower surface of the detachable lid 43 can be provided with gripping portions 104 protruding downward. The gripping portions 104 can be arranged at intervals, for example, arranged at intervals around the material cleaning compartment main body 6. The figure schematically shows two gripping portions 104, which are located on opposite sides of the material cleaning compartment main body 6. When a user desires to clean the detachable lid 43, the material cleaning chamber, the waste discharge conduit 10 and the steam passage 110, the detachable lid 43 and the material cleaning compartment assembly 5 connected thereto can be disassembled by just grasping the gripping portions 104 with a hand, which is convenient to operate.

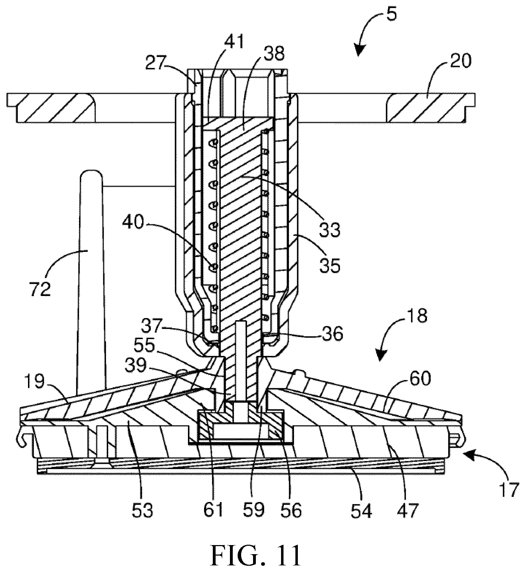

Figs. 11 to 13 show the specific structure and arrangement of the stirring assembly 18 and the material cleaning compartment lid 17. The stirring member 19 is provided with a conical guide surface inclined outward from top to bottom in the radial direction of the stirring member 19. In this solution, a material on the stirring member 19 is not only subject to a centrifugal force during its rotation, but also easier to be thrown out due to the inclined guide surface. In addition, the inclined guide surface facilitates the downward sliding of the material, which can reduce material residue in the material cleaning chamber.

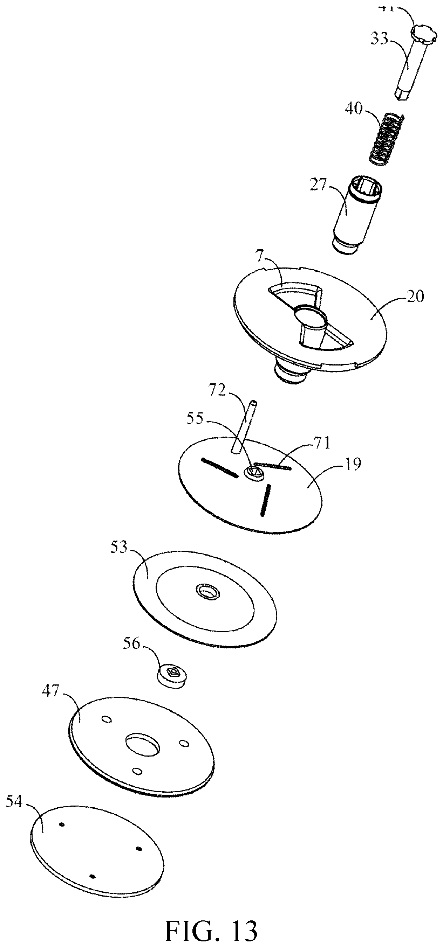

Preferably, an upper surface of the stirring member 19 is further provided with a spoiler rib 71 (Fig. 13) and a spoiler column 72. The spoiler rib 71 and the spoiler column 72, when used in combination, can disturb the flow of material and water in the material cleaning chamber during rotation, so as to better clean the material. It can be understood that those skilled in the art can also provide only the spoiler rib 71 or only the spoiler column 72 as needed. In the illustrated mode of realization, the spoiler column 72 is configured to be in a cylindrical shape and arranged vertically. In other modes of realization (not shown), the spoiler column 72 can be arranged obliquely. It can be inclined relative to the stirring member 19, or perpendicular to the stirring member 19. Or, the shape of the cross section of the spoiler column 72 can be configured as a square, a rhombus, an ellipse, a polygon, etc. The spoiler column 72 can be integrally formed with the stirring member 19, or they can be two separate pieces.

Preferably, the spoiler column 72 and the stirring member 19 are made of different materials to achieve the best stirring effect, thereby reducing material residue. Those skilled in the art can set the number of spoiler columns 72 according to actual needs. For example, one or more spoiler columns can be provided. Preferably, two spoiler columns 72 are provided and connected at the same position on the stirring member 19 but extend in different directions. Preferably, the height and width of the spoiler rib 71 are less than 10 mm. The spoiler rib 71 can be configured in the shape of a straight line, an arc, an S shape, etc. One or more spoiler ribs 71 can be provided.

In a preferred mode of realization, the material cleaning compartment lid 17 comprises a lid plate 53, a supplemental lid plate 54, and a sealing portion 47 arranged between the lid plate 53 and the supplemental lid plate 54. The lid plate 53 is connected to the stirring member 19 below the stirring member 19. The outer periphery of the sealing portion 47 abuts sealingly against the inner periphery of the material cleaning compartment main body 6.

In a preferred mode of realization, the sealing portion 47 is configured to be in the shape of a sheet and is clamped between the lid plate 53 and the supplemental lid plate 54. In a clamped state, a portion of the outer periphery of the sealing portion 47 is exposed from the lid plate 53 and the supplemental lid plate 54, thereby forming a seal with the material cleaning compartment main body 6. The sealing portion 47 can be made of a soft plastic material such as rubber, silicone, etc. Preferably, the lid plate 53 and the supplemental lid plate 54 are made of a hard plastic material to avoid deformation when the entire material cleaning compartment lid 17 is made of a soft plastic material. By way of example, the lid plate 53, the sealing portion 47 and the supplemental lid plate 54 can be fixed together by screw fastening. In this mode of realization, the material cleaning compartment lid 17 does not rotate with the stirring member 19. Thus, the sealing portion 47 can be prevented from being worn.

The stirring assembly 18 further comprises a limiting portion 56 with a circular cross section. The limiting portion 56 is provided with a protrusion 57 with a non-circular cross section. For example, in the illustrated mode of realization, the cross section of the protrusion 57 is square.

The stirring member 19 is provided with a connection port 55 that passes through the stirring member 19 in the height direction of the stirring member 19. The stirring member 19 has a hollow sleeve portion 59 extending downward. The hollow portion of the sleeve portion 59 forms a part of the connection port 55. The stirring member 19 is further provided with a recessed portion 60 opening downward. The sleeve portion 59 extends into the recessed portion 60. The limiting portion 56 is connected to the connection port 55 from below the connection port 55. Specifically, the protrusion 57 of the limiting portion 56 is inserted into the connection port 55. Preferably, the shape of the cross section of the connection port 55 matches that of the protrusion 57 and is a non-circular shape, so that the stirring member 19 can rotate together with the limiting portion 56. In the illustrated mode of realization, the cross section of the connection port 55 is square.

The shape of the lid plate 53 is adapted to that of the recessed portion 60. The lid plate 53 is provided with a connecting portion 61 protruding inward in its radial direction and located at the upper side of the limiting portion 56. This solution enables the stirring member 19, the limiting portion 56 and the lid plate 53 to move up and down together.

In a preferred mode of realization, the stirring assembly 18 further comprises a rotary shaft 33 and a connecting shaft 27 connected to the rotary shaft 33. The connecting shaft 27 is a hollow structure, and has an inner surface provided with a toothed structure extending in its height direction. The rotary shaft 33 has a first end 38 and a second end 39. The first end 38 is connected to the inside of the connecting shaft 27 and is provided with a toothed structure that cooperates with the toothed structure of the connecting shaft 27, so that the connecting shaft 27 can drive the rotary shaft 33 to rotate together, and the rotary shaft 33 can move up and down relative to the connecting shaft 27 in the connecting shaft 27. The second end 39 is inserted into the connection port 55 of the stirring member 19. Preferably, the second end 39 has a shape that matches the shape of the connection port 55. In the illustrated mode of realization, the cross section of the second end 39 is square, so that the rotary shaft 33 can drive the stirring member 19 to rotate and move up and down together.

The top lid 20 is provided with a recess 35 extending downward. The connecting shaft 27 is arranged in the recess 35. A first through hole 36 and a second through hole 37 are respectively provided at the bottom of the recess 35 and the bottom of the connecting shaft 27. The rotary shaft 33 extends through the first through hole 36 and the second through hole 37 to be connected inside the connecting shaft 27.

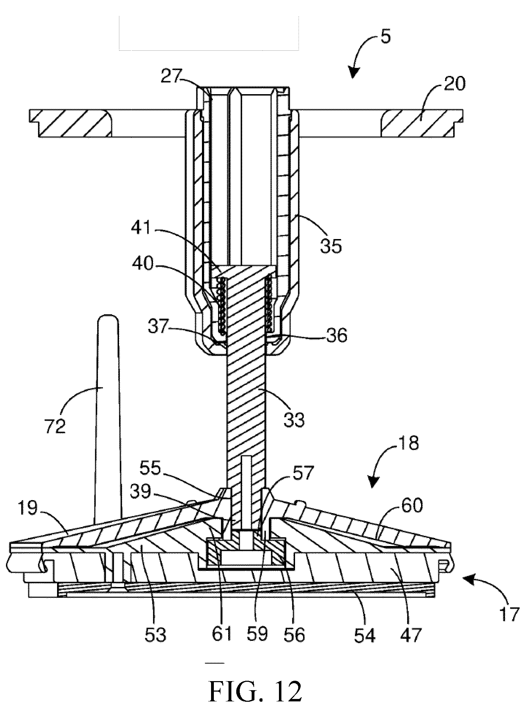

Preferably, the material cleaning compartment assembly 5 further comprises an elastic member 40. The elastic member 40 can be configured as a spring. The elastic member 40 is sleeved on the rotary shaft 33 inside the connecting shaft 27, and a first end 38 of the rotary shaft 33 has a flange portion 41 extending radially outward from the rotary shaft 33 to limit the elastic member 40 to an appropriate position. The elastic member 40 can reset the rotary shaft 33 and the stirring member 19 connected to the rotary shaft 33 upward, that is, to make them return from the position shown in Fig. 12 to the position shown in Fig. 11.

The cooking appliance 1 further comprises a driving assembly (not shown) arranged above the material cleaning compartment assembly 5 and used to drive the stirring member 19 to rotate and the material cleaning compartment lid 17 to move linearly. For the illustrated mode of realization, the driving assembly can drive at least a part of the stirring assembly 18 to rotate to complete a process of material cleaning and throwing; and can drive at least a part of the stirring assembly 18 to move together with the material cleaning compartment lid 17 between an open position and a closed position to complete operations such as material feeding and drainage. Specifically, the driving assembly comprises a transmission shaft capable of engaging with the connecting shaft 27 and driving the connecting shaft 27 to rotate, and engaging with the rotary shaft 33 and driving the rotary shaft 33 to move downward. The driving assembly further comprises a first driving device for driving the transmission shaft to rotate and a second driving device for driving the rotary shaft 33 to move downward.

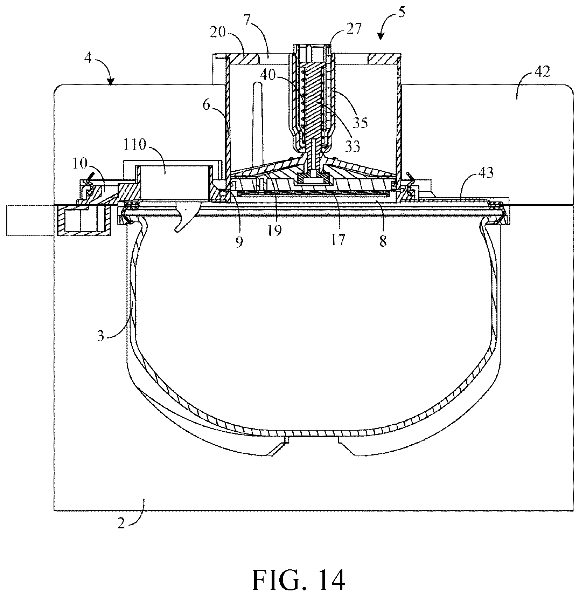

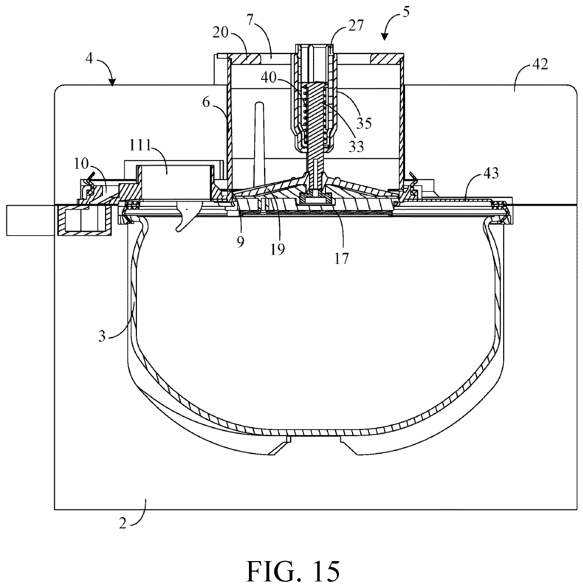

In a mode of realization, the waste discharge conduit 10 can also be used as a steam discharge conduit. The material cleaning compartment lid 17 has at least a communicating position (see Fig. 14) and a sealed position (see Fig. 15) and is movable between the communicating position and the sealed position. When the material cleaning compartment lid 17 moves between the communicating position and the sealed position, the material cleaning compartment lid 17 is always in the material cleaning compartment main body 6 and closes the discharge port 8. That is, the closed position of the material cleaning compartment lid 17 comprise the communicating position and the sealed position. When the material cleaning compartment lid 17 is in the communicating position, or more precisely, when the sealing portion 47 is in the communicating position, the sealing portion 47 in the material cleaning compartment main body 6 is above the waste discharge port 9, and the waste discharge port 9 is in communication with the cooking chamber, so that steam generated in the cooking chamber can be discharged to the outside through the discharge port 8, the waste discharge port 9, and the waste discharge conduit 10. When the material cleaning compartment lid 17 is in the sealed position, or more precisely, when the sealing portion 47 is in the sealed position, the sealing portion 47 in the material cleaning compartment main body 6 is located below the waste discharge port 9, and the waste discharge port 9 is not in communication with the cooking chamber. At this time, steam generated in the cooking chamber cannot be discharged through the waste discharge port 9.

In a mode of realization, while being capable of opening and closing the discharge port 8, the material cleaning compartment lid 17 can also serve as a waste discharge valve and open or close the waste discharge port 9 as needed. Specifically, when the sealing portion 47 is in the communicating position, the waste discharge port 9 is not in communication with the material cleaning chamber. When the sealing portion 47 is in the sealed position, the waste discharge port 9 is in communication with the material cleaning chamber so that a waste discharge operation can be performed. In this solution, a waste discharge valve can be omitted.

Figs. 14 and 15 show the material cleaning compartment lid 17 in different closed positions. Specifically, Fig. 14 shows the material cleaning compartment lid 17 in the communicating position, and Fig. 15 shows the material cleaning compartment lid 17 in the sealed position. Taking waste discharge by gravity as an example, when the material cleaning compartment lid 17 is in the communicating position and material cleaning is performed, actions of adding material and water to the material cleaning chamber and cleaning the material can be performed; when the material cleaning compartment lid 17 is in the communicating position and steaming or boiling is performed, steam can be discharged out through the waste discharge port 9 and the waste discharge conduit 10. When the material cleaning compartment lid 17 is in the sealed position, an action of discharging waste can be performed. Modes such as waste discharge by siphon or waste discharge by a water pump, etc. can also be used. In these solutions, actions of adding material and water to the material cleaning chamber, and cleaning the material can be performed either when the material cleaning compartment lid 17 is in the communicating position or when the material cleaning compartment lid 17 is in the sealed position.

Fig. 16 shows the material cleaning compartment lid 17 in the open position. When the material cleaning compartment lid 17 is in the open position and material cleaning is performed, an action of dropping the material can be performed. If necessary and/or desired, when the material cleaning compartment lid 17 is in the open position and steaming or boiling is performed, steam can be discharged out through the material cleaning chamber and the feed port 7.

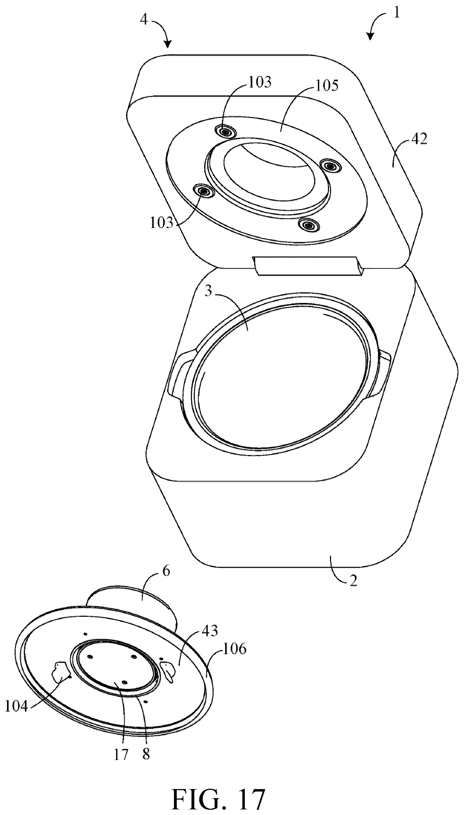

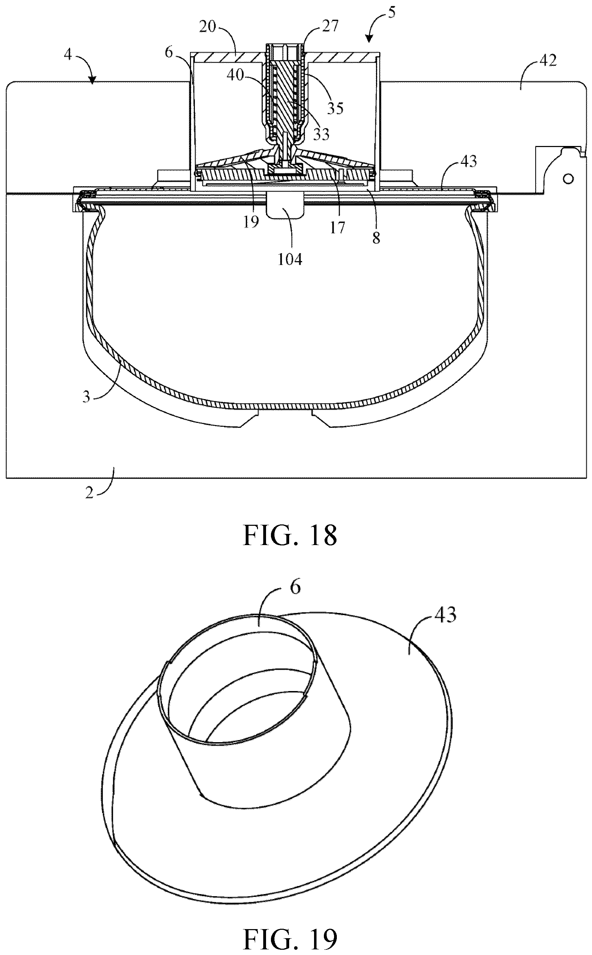

Figs. 17 to 19 show another mode of realization of the cooking appliance, which is different in that the pot lid 4 is not provided with a waste discharge conduit. Waste is discharged through components such as a water pump and a waste discharge pipe connected thereto. An example is that when waste needs to be discharged, a part of the waste discharge pipe can be placed in the material cleaning chamber, and water is pumped out by, for example, a water pump. The material cleaning compartment assembly 5 is detachable together with the detachable lid 43 so that the material cleaning chamber and the detachable lid 43 can be cleaned at the same time. As shown in Fig. 19, the detachable lid 43 is connected to the material cleaning compartment main body 6. If necessary and/or desired, the detachable lid 43 and the material cleaning compartment main body 6 can be integrally formed.

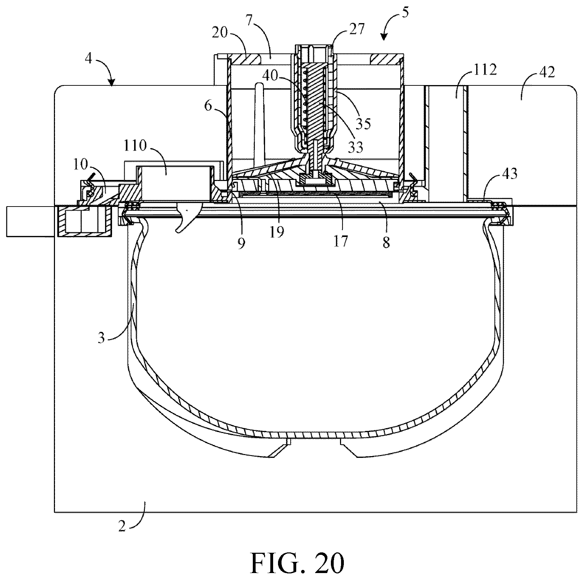

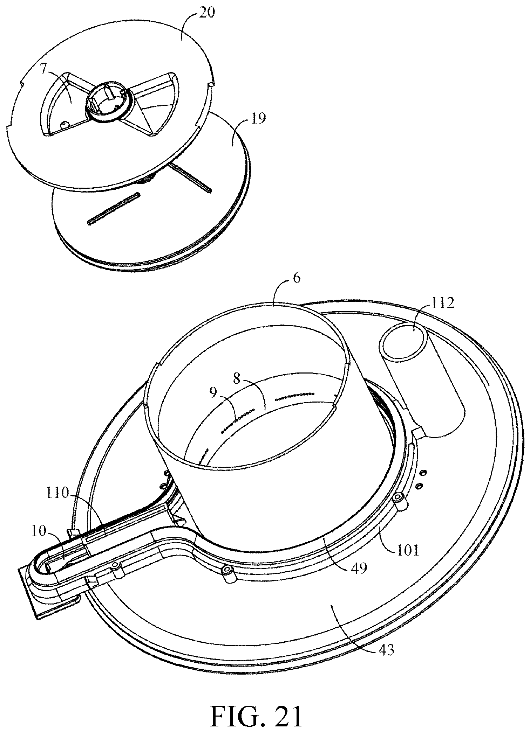

Figs. 20 to 21 show a cooking appliance of yet another mode of realization, which is different in that, in addition to the waste discharge conduit 10 and the steam passage 110, the pot lid 4 is further provided with a steam valve 112. The illustrated mode of realization only schematically shows a simplified structure of the steam valve 112. The steam valve 112 can be arranged at the detachable lid 43 and detachably connected to the pot lid main body 42 together with the detachable lid 43. The steam valve 112 is in communication with the cooking chamber and extends to the outside of the pot lid 4, for example, to the upper surface of the pot lid main body 42. The steam valve 112 can be disassembled together with the detachable lid 43 so as to clean the detachable lid 43, the material cleaning chamber and the steam valve 112 at the same time. The steps of assembly and disassembly of components are further reduced, and the disassembly and cleaning process is simplified. Optionally, the steam valve 112 and the detachable lid 43 are two independent components, and the steam valve 112 is connected to the detachable lid 43 by a fastening structure such as screws arranged at intervals. Alternatively, the steam valve 112 can be integrally formed with the detachable lid 43.

In other modes of realization, the steam valve 112 can be arranged at the material cleaning compartment main body 6 and connected to the detachable lid 43 together with the material cleaning compartment main body 6. Optionally, the steam valve 112 and the material cleaning compartment main body 6 are two independent components, and the steam valve 112 is connected to the material cleaning compartment main body 6 by a fastening structure such as screws arranged at intervals. Alternatively, the steam valve 112 can be integrally formed with the material cleaning compartment main body 6.

Unless otherwise defined, the technical and scientific terms used herein have the same meaning as those generally understood by those skilled in the art of the present application. The terms used herein are only for describing specific implementations and are not intended to limit the present application. The features described herein in one mode of realization can be applied to another mode of realization individually or in combination with other features, unless the feature is not applicable in the other mode of realization or it is otherwise specified.

While the present application has been described through the above embodiments, it should be understood that the above embodiments are only for the purpose of example and explanation, and the present application is not limited thereto. According to the teachings of the present application, more variations and modifications can be made, and these variations and modifications all fall within the scope of protection claimed by the present application.

## Claims

1. A cooking appliance (1) **characterized in that** it comprises:
a pot lid (4) comprising a pot lid main body (42) and a detachable lid (43) located at a lower side of the pot lid main body (42); and
a material cleaning compartment assembly (5) comprising a material cleaning compartment main body (6) forming a material cleaning chamber having a feed port (7) and a discharge port (8), the material cleaning compartment assembly (5) being arranged at the pot lid (4) and being connected to the detachable lid (43), the material cleaning compartment assembly (5) and the detachable lid (43) being together detachably connected to the pot lid main body (42).

2. The cooking appliance (1) of claim 1, further comprising a waste discharge conduit (10), wherein the material cleaning compartment main body (6) is provided with a waste discharge port (9) which is in communication with one end of the waste discharge conduit (10), and the other end of the waste discharge conduit (10) is provided with an outlet, a part or all of the waste discharge conduit (10) being connected to the detachable lid (43) and/or the material cleaning compartment main body (6).

3. The cooking appliance (1) of claim 2, wherein a part or all of the waste discharge conduit (10) is integrally formed with the material cleaning compartment main body (6).

4. The cooking appliance (1) of claim 2 or 3, wherein the pot lid main body (42) is provided with a covering portion (45), and the detachable lid (43) is provided with a supporting portion (44), the covering portion (45) covering the supporting portion (44), the waste discharge conduit being formed between the two, the supporting portion (44) being connected to the material cleaning compartment main body.

5. The cooking appliance (1) of claim 4, further comprising a sealing member (49) and a crimping member (101), the sealing member (49) being crimped between the supporting portion (44) and the crimping member (101), the crimping member (101) being fixed to the detachable lid (43), the sealing member (49) abutting against the covering portion (45).

6. The cooking appliance (1) of claim 4 or 5, wherein the supporting portion (44) is integrally formed with the material cleaning compartment main body (6).

7. The cooking appliance (1) of claim 3, wherein the waste discharge conduit (10) comprises a conduit main body and a waste discharge passage extending inside the conduit main body, the conduit main body being integrally formed with the material cleaning compartment main body (6).

8. The cooking appliance (1) of any one of claims 2 to 7, wherein the material cleaning compartment main body (6) is provided with a plurality of waste discharge ports (9) arranged in a spaced apart manner in a circumferential direction of the material cleaning compartment main body (6), the waste discharge conduit comprising a first conduit (50) and a second conduit (51), the second conduit (51) being arranged in a ring shape around the material cleaning compartment main body (6) and being in communication with the plurality of waste discharge ports (9), the first conduit (50) being in communication with the second conduit (51) and extending to an outer periphery of the pot lid (4); or
wherein the waste discharge port (9) is arranged in one position of the material cleaning compartment main body (6), and the waste discharge conduit comprises a first conduit (50) in communication with the waste discharge port (9) and extending to an outer periphery of the pot lid (4).

9. The cooking appliance (1) of any one of claims 2 to 7, wherein the other end of the waste discharge conduit extends out from an outer periphery of the detachable lid (43).

10. The cooking appliance (1) of any one of claims 2 to 7, further comprising a steam passage (110) arranged in the waste discharge conduit and in communication with the waste discharge conduit.

11. The cooking appliance (1) of claim 10, wherein there is a gap between the steam passage (110) and a side wall of the waste discharge conduit; and/or a top part of the steam passage (110) is provided with an outlet.

12. The cooking appliance (1) of claim 11, wherein a top part of the steam passage (110) protrudes upward from an inner top wall surface of the waste discharge conduit; or
wherein the steam passage (110) is below an inner top wall surface of the waste discharge conduit, and is higher than an inner bottom wall surface of the waste discharge conduit by more than 3 mm.

13. The cooking appliance (1) of any one of claims 2 to 12, further comprising a pot body (2), the pot lid (4) covering the pot body (2) and forming a cooking chamber between it and the pot body (2), the pot lid (4) and the pot body (2) being configured as a square body, the outlet of the waste discharge conduit (10) being located at a corner of the pot lid (4), the pot body (2) being provided with an inlet joint (102), an inlet of which is docked to the outlet of the waste discharge conduit (10).

14. The cooking appliance (1) of any one of claims 2 to 13, wherein the material cleaning compartment assembly (5) further comprises a material cleaning compartment lid (17) movably arranged in the material cleaning chamber , the material cleaning compartment lid (17) being movable at least between a communicating position and a sealed position and comprising a sealing portion (47), the waste discharge port being in communication with a cooking chamber below the pot lid (4) to discharge steam in the cooking chamber when the sealing portion (47) is in the communicating position, and the waste discharge port being not in communication with the cooking chamber when the sealing portion (47) is in the sealed position.

15. The cooking appliance (1) of claim 14, wherein the material cleaning compartment lid (17) is movable between an open position for opening the discharge port (8) and a closed position for covering the discharge port (8); and/or the material cleaning compartment assembly (5) further comprises a stirring member (19) located in the material cleaning chamber and connected to the material cleaning compartment lid.

16. The cooking appliance (1) of any one of claims 1 to 15, further comprising a steam valve (112) arranged at the detachable lid (43) and detachably connected to the pot lid main body (42) together with the detachable lid (43); or
further comprising a steam valve (112) arranged at the material cleaning compartment main body (6) and connected to the detachable lid (43) together with the material cleaning compartment main body (6).

17. The cooking appliance (1) of any one of claims 1 to 16, wherein the pot lid main body (42) is provided with a magnetic component (103), and at least a part of the detachable lid (43) is a magnetic part, there being a magnetic attraction force between the detachable lid (43) and the pot lid main body (42) when the detachable lid (43) is connected to the pot lid main body (42).

18. The cooking appliance (1) of claim 17, wherein the magnetic component (103) is a magnet or an electromagnet, and the magnetic part is a magnet or an electromagnet; or wherein the magnetic component (103) is a magnet or an electromagnet, and the magnetic part is one of iron, nickel, cobalt, ferritic steel, martensitic steel, and austenite-ferrite dual-phase steel; or
wherein the magnetic component (103) is one of iron, nickel, cobalt, ferritic steel, martensitic steel, and austenite-ferrite dual-phase steel, and the magnetic part is a magnet or an electromagnet.

19. The cooking appliance (1) of any one of claims 1 to 18, wherein a lower surface of the detachable lid (43) is provided with a gripping portion (104) protruding downward; and/or wherein the pot lid main body (42) is provided with a mounting groove (105) in which the detachable lid (45) is located, the mounting groove (105) having a shape adapted to that of the detachable lid (45).

20. The cooking appliance (1) of any one of claims 1 to 19, further comprising a driving assembly, wherein the material cleaning compartment assembly (5) further comprises a material cleaning compartment lid (17) and a stirring member (19) located in the material cleaning chamber and connected to the material cleaning compartment lid (17), the material cleaning compartment lid (17) being movable between an open position for opening the discharge port (8) and a closed position for covering the discharge port (8), the driving assembly being arranged above the material cleaning compartment assembly (5) and configured to drive the stirring member (19) to rotate and the material cleaning compartment lid (17) to move linearly; and/or
further comprising a clean water tank (81) and a wastewater tank (48), the clean water tank (81) being docked to the feed port (7) through a water delivery component, the material cleaning chamber being docked to the wastewater tank (48) through the waste discharge conduit (10); and/or
further comprising a material storage compartment (13) and a material feeding component (15) configured to transport a food material in the material storage chamber (13) to the material cleaning chamber through the feed port (7).
